# EUROPEAN PATENT SPECIFICATION

(11) **EP 3 740 462 B1**
(45) Date of publication and mention of the grant of the patent: **05.11.2025**
(21) Application number: 19703875.5
(22) Date of filing: 17.01.2019
(51) Int. Cl.: C04B 35/18, C04B 35/632, C04B 35/638, C04B 35/80

(54) **METHOD OF MAKING A CERAMIC MATRIX COMPOSITE**
VERFAHREN ZUR HERSTELLUNG EINES KERAMIKVERBUNDWERKSTOFFS
PROCÉDÉ DE FABRICATION D'UN COMPOSITE À MATRICE CÉRAMIQUE

(30) Priority: 19.01.2018 US 201862619198 P
(43) Date of publication of application: 25.11.2020
(73) Proprietor: Albany Engineered Composites, Inc., Rochester, NH 03867 (US)
(72) Inventor: TAGGART, James, Bath, ME 04530 (US)
(74) Representative: Zacco Sweden AB
(86) International application number: PCT/US2019/013935
(87) International publication number: WO 2019/143768

(56) References cited:
- EP-A1- 1 043 293
- EP-A1- 1 647 537
- WO-A1-2014/143117
- US-A1- 2004 096 619

## Description

### BACKGROUND

### 1. Field of the Disclosure

The present disclosure relates to a method of making a ceramic matrix composite. In particular, the disclosure relates to infiltration of a matrix material into a preform of the composite.

### 2. Related Art

Ceramic matrix composites (CMCs) are a subgroup of composite materials as well as a subgroup of ceramics. CMCs have ceramic fibers embedded in a ceramic matrix to form a ceramic fiber reinforced ceramic material. The matrix and fibers can include any ceramic material or carbon and carbon fibers.

Oxide Ceramic materials are divided into two categories, monolithic oxide ceramics and oxide ceramic matrix composites (CMC). Monolithic oxide ceramic materials are comprised of pure oxide ceramic powders that have been hot pressed and sintered in excess of 1600°C. Oxide CMCs are comprised of an oxide ceramic matrix reinforced with oxide ceramic fibers. The oxide fibers offer improved mechanical properties over monolithic. Due to the delicate nature of the fiber reinforcement, oxide CMCs are typically manufactured using liquid slurries either coated onto the oxide fiber/fabric such as pre-impregnating ("prepregging") or liquid infiltration into the oxide fiber preform such as sol-gel processing.

Carbon (C), silicon carbide (SiC), alumina (Al₂O₃) and mullite (Al₂O₃-SiO₂) fibers are commonly used for CMCs. Particles (referred to as "whiskers" or "platelets") are embedded into the matrix. The matrix materials include C, SiC, alumina and mullite.

The manufacturing processes usually consist of three steps: (1) Lay-up and fixation of the fibers into a preform of the desired shape, (2) Infiltration of the matrix material; and (3) Final machining and, if required, further treatments like coating or impregnation to reduce porosity.

The majority of oxide CMCs are two dimensional (2D) multi-ply lay-ups. This is typically done by prepregging dry fabric with a solvated aluminum oxide matrix slurry that contains a binder. That is, the slurry contains a solvent, matrix binder, and particles. The matrix is thermosetting and only partially cured to allow easy handling during subsequent processing. The prepregged oxide CMC will later be subjected to a temperature that will fully cure the matrix material.

The plies for the oxide CMC composite are then cut from the prepregged fabric and layed up in a vacuum bag (for autoclave processing) or press processed for compaction. Once this is done, an oven curing and sintering process step is performed to complete the processing. In the event additional densification is desired, vacuum infiltration is usually done with varying dilute slurries containing 20-60% (by weight fraction) solids to improve infiltration through the rigidized oxide CMC.

Another common process method is to lay-up a stack of dry 2D plies or a three-dimensional (3D) preform and infiltrate with aluminum oxide slurry. In this approach, the dry plies are stacked between two tooling plates (platens) and infiltrated in a slurry bath with an oxide slurry formulation containing high solids content, often 75% or greater (by weight fraction) solids. This is followed by a curing step and a sintering step. The oxide CMC is then rigidized and "free standing", meaning no longer needs to be in a tool.

The cured/sintered "free standing" oxide CMC can be re-infiltrated by an additional series (one or more) immersions of the oxide CMC in a slurry bath with an oxide slurry formulation containing low weight fraction of oxide solids. This is again followed by a curing step and sintering. The re-infiltration and cure/sinter steps are then repeated, with more dilute slurries (to improve infiltration) until the desired density and porosity are achieved.

Oxide CMCs using these methods can be time consuming and may be difficult to implement in composites having complex geometries. For the 2D alumina oxide prepreg approach, there are several significant difficulties. These include:
- Laying up complex shapes with oxide CMC prepreg can be challenging as often the oxide prepreg has poor drapability and often has poor flow characteristics (due to the infiltrated submicron particles).
- Forming plies around sharp radii or sharp edges, especially using off-axis plies, can be very difficult to achieve without causing wrinkles or other anomalies in the plies.
- Ply kits for complex parts, especially if using off-axis plies, can be very large (many different sizes and configuration plies). This can be time consuming to assemble and can result in human lay-up errors.
- Ply lay-up, vacuum bagging, and autoclave cycling could be slow and labor intensive.

Additionally, slurry infiltrations also have difficulties, these include:
- Additional slurry infiltrations could "seal off" the outer surfaces and make inaccessible internal porosity of the CMC. That is, the slurry particles may not infiltrate into the center of the CMC well in later processing cycles. The outer CMC surfaces can become dense with low porosity and inhibit the matrix from infiltrating into the center of the CMC that still has porous areas. Additional processing steps, such as machining, may be necessary to make the internal porous areas accessible.
- Additional slurry infiltrations in baths could cause matrix build ups in undesired locations requiring final machining to maintain the oxide CMC dimensional tolerances.

Documents US2004/096619A1, EP1043293A1, and WO2014/143117A1 disclose previously known methods of making ceramic matrix composites.

### SUMMARY

The present disclosure describes a method of making an oxide ceramic matrix composite as defined in the appended claims. The method includes infiltrating a woven preform with slurry having a solvent, matrix binder, and particles. At least some of the solvent is removed without curing the matrix binder. The infiltrating and solvent removing is repeated until a desired characteristic of the preform is achieved. The desired characteristic is at least one selected from the group consisting of density, porosity, and fiber volume fraction. After the desired characteristic is achieved the slurry is cured and the preform sintered.

At least some of the solvent is removed by exploiting a difference in boiling point temperature between the solvent and the matrix binder.

The preform is heated to a temperature greater than the boiling point of the solvent and less than the matrix binder to evaporate the solvent, which is then infiltrated into the preform with the slurry and the evaporated solvent drawn off. In a particular implementation the solvent is isopropyl alcohol or acetone, the matrix binder is aluminum silicate or silane, and the solid particles are an oxide ceramic material.

It is contemplated in certain embodiments that the solvent can be water and the particles can be silicon dioxide in combination with a matrix binder. More particularly, in certain embodiments the particles can be colloidal silica.

In some implementations, the solid particles have a size distribution in the range of 1 nanometer to 1000 nanometers. In some implementations, the slurry has solid particles between 50% and 85% by weight and solvent between 15% and 50% by weight. In particular, in some implementations, the slurry has solid particles between 75% and 81% by weight and solvent between 19% and 25% by weight.

In some embodiments, the oxide ceramic material is selected from the group consisting of aluminum oxide, zirconium dioxide, and yttria-stabilized zirconia.

### BRIEF DESCRIPTION OF THE DRAWINGS

The accompanying drawings, which are included to provide a further understanding of the invention, are incorporated in and constitute a part of this specification. The drawings presented herein illustrate different embodiments of the invention and together with the description serve to explain the principles of the invention. In the drawings:
FIG. 1 illustrates a generalized system arrangement for densification of a CMC by slurry infiltration.
FIG. 2 is a flowchart of an implementation of the disclosed method; and
FIG. 3 illustrates various types of 3D fiber architectures.

### DETAILED DESCRIPTION

Terms "comprising" and "comprises" in this disclosure can mean "including" and "includes" or can have the meaning commonly given to the term "comprising" or "comprises" in U.S. Patent Law. Terms "consisting essentially of" or "consists essentially of" if used in the claims have the meaning ascribed to them in U.S. Patent Law. Other aspects of the invention are described in or are obvious from (and within the ambit of the invention) the following disclosure.

The terms "threads", "fibers", "tows", and "yarns" are used interchangeably in the following description. "Threads", "fibers", "tows", and "yarns" as used herein can refer to monofilaments, multifilament yarns, twisted yarns, multifilament tows, textured yarns, braided tows, coated yarns, bicomponent yarns, as well as yarns made from stretch broken fibers of any materials known to those of ordinary skill in the art. Yarns can be made of carbon, nylon, rayon, fiberglass, cotton, ceramic, aramid, polyester, metal, polyethylene glass, and/or other materials that exhibit desired physical, thermal, chemical or other properties.

"Slurry" means a dispersion of solids, e.g., particles, such as ceramic particles, in a liquid carrier (solvent), which may also contain additives such as binders, surfactants, dispersants, etc.

"CMC" means ceramic matrix composite. A subcategory of CMC includes "oxide CMC".

For a better understanding of the invention, its advantages and objects attained by its uses, reference is made to the accompanying descriptive matter in which non-limiting, embodiments of the invention are illustrated in the accompanying drawings and in which corresponding components are identified by the same reference numerals.

The present disclosure is directed to a method of producing an oxide ceramic matrix composite by slurry infiltration of a preform, such as a 2D woven laminate layup, pin guided fiber placement created preform, 3D woven preform or a braided preform (fiber preform types are hereafter included in the term "preform" or "fiber preform") in a preform/mold tool (also referred to interchangeably as "tool" and "injection tool"). A feature of the present method is removal of the slurry solvent from the injection tool without allowing a complete curing or setting of the binder.

The present method takes advantage of, or exploits, differences in chemical or physical properties between the solvent and binder. Using the property difference, the process to remove the solvent and not completely cure the binder can enable better control of density, porosity, and fiber volume fraction of the resultant CMC. The uncured binder allows the particles/binder to flow within the mold allowing for the manipulation of design factors such as final CMC design factors such as density, porosity, and fiber volume fraction, etc.

### Infiltrate

In some embodiments, the injection slurry used in this process comprises oxide ceramic materials including aluminum oxide particles or yttria-stabilized zirconia (YSZ or ZrO₂), a matrix binder ("binder"), and a solvent. The particles in this slurry are typically submicron milled particles having a size distribution from 1 nanometer to 1000 nanometers. In an embodiment, the particles may be silicon dioxide and, in a particular embodiment, colloidal silica particles. The slurry can have solids in the range from 50-85% (by weight fraction) and solvent in the range of 15-50% (by weight fraction). Slurry having solids in the range of 55-85% (by weight fraction) and solvent in the range of 15-45% (by weight fraction) can be more time efficient than using solids in the range of 50-54%. It is anticipated that slurries having solids of 60-75% (by weight fraction) and solvent of 25-40% (by weight fraction) can be used. In a particular implementation, an aluminum oxide slurry has solids in the range of 75-81% (by weight fraction) and solvent in the range of 19-25% (by weight fraction).

The binder used may be an aluminum silicate, silane, or other commonly known matrix binder. The solvent used is a highly volatile solvent such as isopropyl alcohol (IPA), acetone, or such. "Highly volatile" means more volatile than the matrix binder. In some embodiments, the solvent may be water.

As such, the CMC comprises three components: (1) a solvent, (2) a matrix binder, and (3) particles. The CMC includes any combination of the three components. For example, the solvent can be any of isopropyl alcohol, acetone, or water; the matrix binder can be any of aluminum silicate, silane, or other commonly known matrix binder; and the particles can be a ceramic material including aluminum oxide particles or yttria-stabilized zirconia (YSZ or ZrO₂), or can be silicon dioxide (which includes colloidal silica). Each of these components can be characterized as described herein above.

### Fiber Preform

The 2D woven dry fiber (or prepreg) lay-up, three dimensional (3D) woven preform, pin guided fiber placement created preform, braided preform, or other preform(s) can be produced with aluminum oxide fiber. The 2D architecture can have a laminate structure ply lay-up schedule including 0°/90°, 0°/-45°/90°/45° or any combination thereof. "0°/90°" lay-up schedule means the warp fibers alternate between being at 0° and 90°, with respect to an arbitrary datum, in successive layers. "0°/-45°/90°/45°" lay-up schedule provides the angle of the warp fibers, with respect to an arbitrary datum, in successive layers. Similarly, a 0°/-60°/90°/60° lay-up could be used.

In some instances, the preform is a near net shape technique of the item being fabricated. That is, the preform is very close to the final (net) shape desired, which can reduce the need for surface finishing, machining or grinding, and/or waste. Moreover, processing time can be reduced.

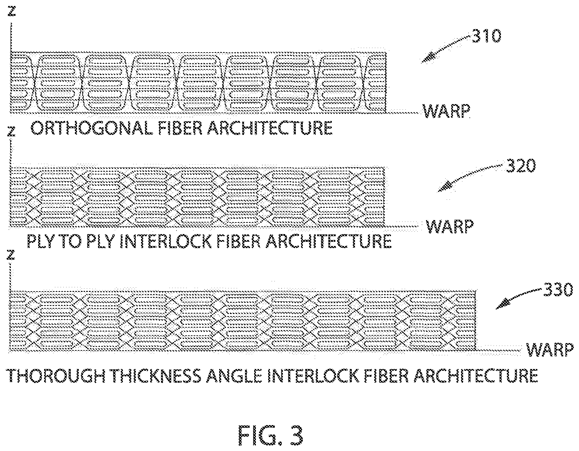

The 3D fiber architecture can be either orthogonal 310, ply-to-ply 320, or angle interlock 330 as shown in Figure 3. The fiber volumes in the warp and weft (fill) directions can vary depending on the application. The aluminum oxide fiber can be, for example, any of the 3M^{®} Nextel^{®} fiber grades and in any denier or other similar fibers.

### Tooling and Equipment

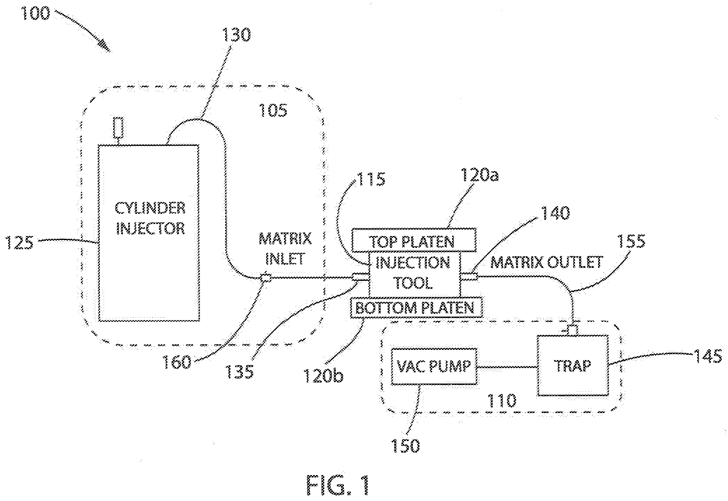

Figure 1 illustrates a simplified diagram of a matrix infiltration system that can be used to implement the present method to make an oxide CMC. The system includes a matrix inlet 105 to provide the matrix slurry and a matrix outlet 110 to remove matrix slurry and, in particular, solvent of the slurry, from the preform (not shown). The preform is disposed in a cavity of an injection tool 115, the cavity having a complementary shape to the preform. The injection tool is in at least two parts so that the cavity can be exposed to accommodate the preform.

The parts of the injection tool 115 can be held together by a tool press having a top platen 120a and bottom platen 120b. The platens 120a, 120b serve the purpose of holding the parts of the injection tool together against the pressure of the infiltration of the matrix slurry. Heaters, not shown, to apply heat to the injection tool may be part of, or separate from, the tool press.

Matrix inlet 105 includes a cylinder injector 125 to provide matrix slurry under positive pressure through a tube 130 to one or more inlet ports 135 of the injection tool 115. A valve 160 may be provided to inhibit flow into the preform when solvent is being removed during the densification of the preform. Matrix outlet 110 includes a vacuum pump 150 to provide negative pressure through a matrix trap 145 and tube 155 to one or more outlet ports 140 of the injection tool 115.

The positive pressure applied to the matrix slurry at the one or more inlet ports 135 combined with the negative pressure applied at the one or more outlet ports 140 can aid in evening distribution of the matrix slurry throughout the preform during infiltration. Matrix trap 145 can capture excess slurry that exits one or more outlet ports 140 during slurry infiltration. Negative pressure applied to one or more outlet ports 140 also can draw off solvent for densification of the preform.

In use, valve 160 is open to enable matrix slurry to be provided under positive pressure from the cylinder injector to the preform in the injection tool. Negative pressure can be applied by the vacuum pump to aid in drawing the matrix slurry throughout the preform. Slurry exiting the injection tool can be an indication that the slurry has infiltrated the preform. Excess slurry exiting the injection tool can be captured by the trap.

Valve 160 can be closed during the densification of the preform. In this portion of the process, solvent is separated from the matrix slurry and drawn from the injection tool by negative pressure applied to the one or more outlet ports. Solid oxide particles and binder in the slurry remain in the interstitial spaces of the preform, thereby making the preform more dense.

### Processes

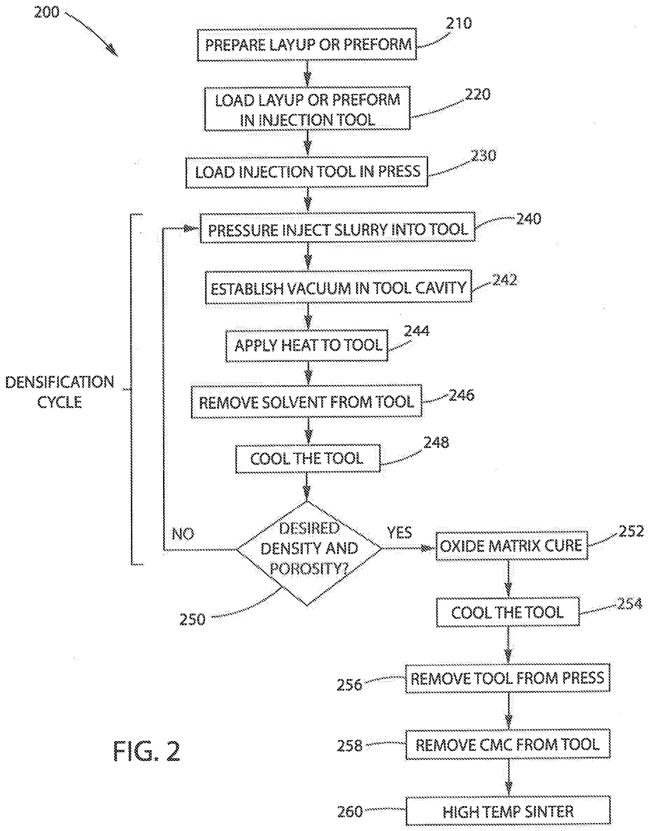

Figure 2 illustrates a flow chart 200 for a method of making an oxide CMC according to the present disclosure. A 2D woven laminate layup, 3D woven preform, pin guided fiber placement created preform, braided preform, or other preform (generally, "preform") is prepared 210 according to techniques known to those of ordinary skill.

The preform is disposed in an injection tool, such as a Resin Transfer Mold tool in a step 220 and then the injection tool is loaded into an injection tool press 230 that applies a pressure to the injection tool to hold the tool together during subsequent application of pressure to the tool.

The preform in the injection tool and press is subjected to a first slurry infiltration, in steps 240, 242, 244, 246, 248, and 250. In step 240, the slurry is injected at a positive pressure into an inlet port of the injection tool and into the preform within the tool. A negative or vacuum pressure can be applied 242 to aid in evenly dispersing the slurry through the preform.

In a particular implementation, the slurry is an IPA solvated mixture comprised of submicron aluminum oxide particles and a silane binder. The preform can be, for example, an aircraft antenna window housing having a nominal size of 8.56" x 8.56" x 0.938" (21.7 cm x 21.7 cm x 2.4 cm). The slurry can be injected into the injection tool at a pressure of 200-250 psi (10340-12930 mmHg) and a flow rate of about 50 cc/min. In addition to the aircraft antenna window housing example above, oxide CMCs find usage in other applications including turbine exhaust structures, radomes, missile, satellite and other hot environment applications.

The pressure of the slurry on the injection tool is then relieved and heat is applied 244 to the slurry in the preform by heating the injection mold tool. When the slurry attains a predetermined temperature, a solvent removal step 246 is initiated to draw off solvent from the preform. A vacuum pump can be used to apply a negative pressure at an outlet port of the injection tool to aid in drawing off the solvent. After removal of the solvent, the heat is removed and the injection tool allowed to cool in a step 248. Removal of the solvent from the slurry leaves the solid oxide particles of the slurry in the interstitial spaces of the preform, thereby making the preform more dense.

Removal of the solvent without fully curing the matrix binder is enabled by making use of the differing physical properties between the solvent and the binder. Physical property differences include differing boiling points, phase diagrams, vapor pressure equations and curves, reactivity, and such. That is, the binder is "B-staged". "B-staging" is a process to remove at least some of the solvent from an adhesive, thereby allowing construction to be "staged" meaning a solid that has been only partially cured.

The boiling temperature difference between the solvent and the matrix binder is used to boil off the solvent but to avoid curing the matrix binder. In one example, the slurry is an IPA solvated mixture comprised of submicron aluminum oxide particles and a silane binder. In this example, heat is applied to raise the temperature of the slurry to the boiling point of the IPA solvent of 180°F (82.5°C), at atmospheric pressure, which is below the curing temperature of the silane binder of 250°F (121.1°C). As such, raising the temperature of the slurry to about 180°F (82.5°C) will cause the IPA solvent to boil off, or evaporate, without curing the silane matrix binder. A vacuum suction pressure can be applied to the injection tool to draw off the evaporated solvent. For example, a suction pressure of 20 inHg (508 mmHg) can be used.

Removal of the solvent can create free/open porosity in the preform. That is, open volume in the preform is created by removing solvent from the binder in the preform. For example, if the slurry is 80% solids and 20% solvent by weight then the removed solvent causes some porosity to remain in the preform.

In step 250, a determination is made whether the oxide CMC has a desired density, porosity, and/or fiber volume fraction. If the oxide CMC does not have the desired density, porosity, and/or fiber volume fraction a second slurry infiltration can be performed according to steps 240-250 with the same or different slurry formulation.

In a second infiltration, the open volume in the preform created from the first solvent removal is filled with slurry. The second infiltration is then solvent stripped, creating free/open porosity for additional infiltrations, if required. This is repeated until the desired CMC density, porosity and/or fiber volume fraction is achieved.

In a particular implementation, the same slurry formulation as in the first infiltration is used. In this implementation no dilution or alternative slurry formulations is needed. As in the implementation discussed above in the first infiltration of an aircraft antenna window housing, the slurry can be injected into the injection mold at a pressure of 200-250 psi (10340-12930 mmHg) and a flow rate of about 50 cc/min. The volume of slurry in a second infiltration is usually less than in the first infiltration.

After completion of the infiltrations, the injection tool and preform is heated to a temperature to cure 252 the matrix binder in the preform. After curing of the matrix binder, the heat is removed from the injection tool and the tool allowed to cool in a step 254. The injection tool is removed from the press 256. The CMC is then de-molded (i.e., removed from the injection tool) 258 and sintered 260. Typical sintering temperatures are 1000°C-1200°C.

Other embodiments are within the scope of the following claims.

## Claims

1. A method of making an oxide ceramic matrix composite, comprising:
providing an injection tool with at least two parts and a cavity therein;
disposing a woven preform in the cavity of the injection tool, the cavity having a complementary shape to the woven preform;
infiltrating the woven preform with slurry having a solvent, matrix binder, and solid particles by use of a matrix inlet in communication with a cylinder injector and a matrix outlet in communication with a vacuum pump and a matrix trap;
removing at least some of the solvent without curing the matrix binder, by using heaters to heat the injection tool, and thereby heating the woven preform to a temperature greater than the boiling point of the solvent and less than the boiling point of the matrix binder to evaporate the solvent and by drawing off the evaporated solvent;
repeating the infiltrating and removing the solvent until a desired characteristic of the woven preform is achieved;
curing the matrix binder in the injection tool after the desired characteristic is achieved and sintering the preform;
wherein the desired characteristic is at least one selected from the group consisting of density, porosity, and fiber volume fraction.

2. The method according to claim 1, wherein the removing of at least some of the solvent includes applying a vacuum by use of a vacuum pump applying a negative pressure to an outlet port of the injection tool to aid in drawing off the solvent.

3. The method according to claim 1, wherein
the solvent is isopropyl alcohol or acetone; and
the matrix binder is aluminum silicate or silane;
wherein the solid particles are an oxide ceramic material and have a size distribution in the range of 1 nanometer to 1000 nanometers.

4. The method according to claim 3, wherein the slurry has solid particles between 50% and 85% by weight and solvent between 15% and 50% by weight.

5. The method according to claim 4, wherein the slurry has solid particles between 75% and 81% by weight and solvent between 19% and 25% by weight.

6. The method according to claim 4, wherein the oxide ceramic material is selected from the group consisting of aluminum oxide, zirconium dioxide, and yttria-stabilized zirconia.

7. The method according to claim 1, wherein
the solvent is water;
the matrix binder is aluminum silicate or silane, and
the solid particles are silicon dioxide.

8. The method according to claim 7, wherein the slurry has solid particles between 50% and 85% by weight and solvent between 15% and 50% by weight, wherein said particles have a size distribution in the range of 1 nanometer to 1000 nanometers.

9. The method according to claim 8, wherein the slurry has solid particles between 75% and 81% by weight and solvent between 19% and 25% by weight, wherein said particles have a size distribution in the range of 1 nanometer to 1000 nanometers.

10. The method according to claim 7, wherein the solid particles are colloidal silica.

11. The method according to claim 1, wherein the slurry has solid particles between 50% and 85% by weight and solvent between 15% and 50% by weight.

12. The method according to claim 11, wherein the slurry has solid particles between 55% and 85% by weight and solvent between 15% and 45% by weight.

13. The method according to claim 12, wherein the slurry has solid particles between 75% and 81% by weight and solvent between 19% and 25% by weight.

14. The method according to claim 1, wherein the woven preform type is selected from the group consisting of a two-dimensional woven dry fiber or prepreg layup, two-dimensional woven laminate layup, pin guided fiber placement created preform, and three-dimensional woven preform.

## Patentansprüche

1. Verfahren zur Herstellung eines Oxidkeramikmatrixverbundwerkstoffs, umfassend:
Bereitstellen eines Einspritzwerkzeugs mit mindestens zwei Teilen und einem Hohlraum darin;
Anordnen einer gewebten Vorform in dem Hohlraum des Einspritzwerkzeugs, wobei der Hohlraum ein komplementäres Gepräge zu der gewebten Vorform aufweist;
Infiltrieren der gewebten Vorform mit einer Aufschlämmung, die ein Lösungsmittel, ein Matrixbindemittel und feste Partikeln aufweist, unter Verwendung eines Matrixeinlasses in Kommunikation mit einer Zylindereinspritzvorrichtung und eines Matrixauslasses in Kommunikation mit einer Vakuumpumpe und einem Matrixabscheider;
Entfernen von mindestens einem Teil des Lösungsmittels ohne Aushärten des Matrixbindemittels unter Verwendung von Erhitzern, um die Einspritzvorrichtung zu erhitzen, und dadurch von Erhitzen der gewebten Vorform auf eine Temperatur, die größer als der Siedepunkt des Lösungsmittels und kleiner als der Siedepunkt des Matrixbindemittels ist, um das Lösungsmittel zu verdampfen, und von Abziehen des verdampften Lösungsmittels;
Wiederholen des Infiltrierens und Entfernens des Lösungsmittels, bis eine erwünschte Eigenschaft der gewebten Vorform erreicht wird;
Aushärten des Matrixbindemittels in dem Einspritzwerkzeug, nachdem die erwünschte Eigenschaft erreicht wurde, und Sintern der Vorform;
wobei die erwünschte Eigenschaft mindestens eines ist, das aus der Gruppe ausgewählt ist, die aus Dichte, Porosität und Faservolumenanteil besteht.

2. Verfahren nach Anspruch 1, wobei das Entfernen von mindestens einem Teil des Lösungsmittels Anwenden eines Vakuums unter Verwendung einer Vakuumpumpe beinhaltet, die einen negativen Druck auf einen Auslassanschluss des Einspritzwerkzeugs anwendet, um bei dem Abziehen des Lösungsmittels zu helfen.

3. Verfahren nach Anspruch 1, wobei
das Lösungsmittel Isopropylalkohol oder Aceton ist; und
das Matrixbindemittel Aluminiumsilikat oder Silan ist;
wobei die festen Partikeln ein Oxidkeramikmaterial sind und eine Größenverteilung in dem Bereich von 1 Nanometer bis 1000 Nanometer aufweisen.

4. Verfahren nach Anspruch 3, wobei die Aufschlämmung zwischen 50 Gew.-% und 85 Gew.-% feste Partikeln und zwischen 15 Gew.-% und 50 Gew.-% Lösungsmittel aufweist.

5. Verfahren nach Anspruch 4, wobei die Aufschlämmung zwischen 75 Gew.-% und 81 Gew.-% feste Partikeln und zwischen 19 Gew.-% und 25 Gew.-% Lösungsmittel aufweist.

6. Verfahren nach Anspruch 4, wobei das Oxidkeramikmaterial aus der Gruppe ausgewählt ist, die aus Aluminiumoxid, Zirkondioxid und yttriumstabilisiertem Zirkon besteht.

7. Verfahren nach Anspruch 1, wobei
das Lösungsmittel Wasser ist;
das Matrixbindemittel Aluminiumsilikat oder Silan ist; und
die festen Partikeln Siliciumdioxid sind.

8. Verfahren nach Anspruch 7, wobei die Aufschlämmung zwischen 50 Gew.-% und 85 Gew.-% feste Partikeln und zwischen 15 Gew.-% und 50 Gew.-% Lösungsmittel aufweist, wobei die Partikeln eine Größenverteilung in dem Bereich von 1 Nanometer bis 1000 Nanometer aufweisen.

9. Verfahren nach Anspruch 8, wobei die Aufschlämmung zwischen 75 Gew.-% und 81 Gew.-% feste Partikeln und zwischen 19 Gew.-% und 25 Gew.-% Lösungsmittel aufweist, wobei die Partikeln eine Größenverteilung in dem Bereich von 1 Nanometer bis 1000 Nanometer aufweisen.

10. Verfahren nach Anspruch 7, wobei die festen Partikeln kolloidales Siliciumdioxid sind.

11. Verfahren nach Anspruch 1, wobei die Aufschlämmung zwischen 50 Gew.-% und 85 Gew.-% feste Partikeln und zwischen 15 Gew.-% und 50 Gew.-% Lösungsmittel aufweist.

12. Verfahren nach Anspruch 11,
wobei die Aufschlämmung zwischen 55 Gew.-% und 85 Gew.-% feste Partikeln und zwischen 15 Gew.-% und 45 Gew.-% Lösungsmittel aufweist.

13. Verfahren nach Anspruch 12,
wobei die Aufschlämmung zwischen 75 Gew.-% und 81 Gew.-% feste Partikeln und zwischen 19 Gew.-% und 25 Gew.-% Lösungsmittel aufweist.

14. Verfahren nach Anspruch 1, wobei die gewebte Vorformart aus der Gruppe ausgewählt ist, die aus einer zweidimensionalen gewebten trockenen Faser oder einer Prepreg-Lage, einer zweidimensionalen gewebten Laminatlage, einer durch stiftgeführte Faserplatzierung kreierten Vorform und einer dreidimensionalen gewebten Vorform besteht.

## Revendications

1. Procédé de fabrication d'un composite à matrice céramique oxydée, comprenant :
la fourniture d'un outil d'injection comportant au moins deux parties et une cavité à l'intérieur de celui-ci ;
la disposition d'une préforme tissée dans la cavité de l'outil d'injection, la cavité ayant une forme complémentaire à celle de la préforme tissée ;
l'infiltration dans la préforme tissée d'une suspension contenant un solvant, un liant matriciel et des particules solides par l'utilisation d'une entrée de matrice en communication avec un injecteur cylindrique et d'une sortie de matrice en communication avec une pompe à vide et un piège à matrice ;
le retrait d'au moins une partie du solvant sans durcissement du liant matriciel, par l'utilisation d'éléments chauffants pour chauffer l'outil d'injection, et ainsi le chauffage de la préforme tissée à une température supérieure au point d'ébullition du solvant et inférieure au point d'ébullition du liant matriciel pour évaporer le solvant et par soutirage du solvant évaporé ;
la répétition de l'infiltration et du retrait du solvant jusqu'à l'obtention de la caractéristique souhaitée de la préforme tissée ;
le durcissement du liant matriciel dans l'outil d'injection une fois la caractéristique souhaitée obtenue et le frittage de la préforme ;
dans lequel la caractéristique souhaitée est au moins une caractéristique sélectionnée dans le groupe constitué par la densité, la porosité et la fraction volumique de fibres.

2. Procédé selon la revendication 1, dans lequel l'élimination d'au moins une partie du solvant comprend l'application d'un vide à l'aide d'une pompe à vide appliquant une pression négative à un orifice de sortie de l'outil d'injection pour faciliter l'extraction du solvant.

3. Procédé selon la revendication 1, dans lequel
le solvant est l'alcool isopropylique ou l'acétone ; et
le liant matriciel est le silicate d'aluminium ou le silane ;
dans lequel les particules solides sont un matériau céramique d'oxyde et ont une distribution de taille dans la plage de 1 nanomètre à 1000 nanomètres.

4. Procédé selon la revendication 3, dans lequel la suspension contient des particules solides entre 50 % et 85 % en poids et du solvant entre 15 % et 50 % en poids.

5. Procédé selon la revendication 4, dans lequel la suspension contient des particules solides entre 75 % et 81 % en poids et du solvant entre 19 % et 25 % en poids.

6. Procédé selon la revendication 4, dans lequel le matériau céramique d'oxyde est choisi dans le groupe constitué par l'oxyde d'aluminium, le dioxyde de zirconium et la zircone stabilisée à l'yttrium.

7. Procédé selon la revendication 1, dans lequel
le solvant est l'eau ;
le liant matriciel est le silicate d'aluminium ou le silane, et
les particules solides sont le dioxyde de silicium.

8. Procédé selon la revendication 7, dans lequel la suspension contient des particules solides entre 50 % et 85 % en poids et du solvant entre 15 % et 50 % en poids, lesdites particules ayant une distribution de taille dans la plage de 1 nanomètre à 1000 nanomètres.

9. Procédé selon la revendication 8, dans lequel la suspension contient des particules solides entre 75 % et 81 % en poids et du solvant entre 19 % et 25 % en poids, lesdites particules ayant une distribution de taille dans la plage de 1 nanomètre à 1000 nanomètres.

10. Procédé selon la revendication 7, dans lequel les particules solides sont la silice colloïdale.

11. Procédé selon la revendication 1, dans lequel la suspension contient des particules solides entre 50 % et 85 % en poids et du solvant entre 15 % et 50 % en poids.

12. Procédé selon la revendication 11,
dans lequel la suspension contient des particules solides entre 55 % et 85 % en poids et du solvant entre 15 % et 45 % en poids.

13. Procédé selon la revendication 12,
dans lequel la suspension contient des particules solides entre 75 % et 81 % en poids et du solvant entre 19 % et 25 % en poids.

14. Procédé selon la revendication 1, dans lequel le type de préforme tissée est sélectionné dans le groupe constitué d'une couche de fibres sèches tissées bidimensionnelles ou de préimprégnés, d'une couche de stratifié tissé bidimensionnel, d'une préforme créée par placement de fibres guidées par broche et d'une préforme tissée tridimensionnelle.
